# EUROPÄISCHE PATENTSCHRIFT

(11) **EP 2 463 004 B1**
(45) Veröffentlichungstag und Bekanntmachung des Hinweises auf die Patenterteilung: **20.11.2013**
(21) Anmeldenummer: 10194117.7
(22) Anmeldetag: 08.12.2010
(51) Int. Cl.: B01D 19/00

(54) **Gasabscheider**
Gas separator
Séparateur de gaz

(43) Veröffentlichungstag der Anmeldung: 13.06.2012
(73) Patentinhaber: AFRISO-Euro-Index GmbH, 74363 Güglingen (DE)
(72) Erfinder: Thomas, Heinz, D-74374 Zaberfeld (DE); Nadine, Grob, D-74906 Bad Rappenau (DE); Thomas, von Olnhausen, D-75031 Kleingartach (DE)
(74) Vertreter: Kohler Schmid Möbus

(56) Entgegenhaltungen:
- DE-A1-102005 060 851
- DE-C- 288 158
- DE-U1- 29 514 333
- DE-U1-202006 005 205
- FR-E- 39 226
- US-A- 3 677 716
- US-A- 3 747 302
- US-B1- 7 279 031

## Beschreibung

Die Erfindung betrifft einen Gasabscheider zum Abscheiden von in einer Flüssigkeit enthaltenen Gasblasen gemäß Oberbegriff von Anspruch 1.

Ein derartiger Gasabscheider ist beispielsweise durch DE 295 14 333 U1 bekannt geworden.

Abscheider werden in der Technik überall dort eingesetzt, wo in einer Flüssigkeit enthaltene Stoffe, wie beispielsweise sedimentationsfähige Partikel oder auch Gase bzw. Gasgemische, aus der Flüssigkeit entfernt werden müssen. Am Markt sind Abscheider bekannt, die ein Abscheidergehäuse aufweisen, das im Betrieb in horizontaler Richtung von der Flüssigkeit durchströmt ist und die so vereinfacht an einbauseitig horizontal angeordnete Anschlussleitungen für die Flüssigkeit angeschlossen werden können. Die Abscheider sind häufig derart konzipiert, dass das Abscheidergehäuse beidseitig durchströmbar ist, d.h. dass die Flüssigkeit von links nach rechts oder aber von rechts nach links durch das Abscheidergehäuse strömen kann. Die am Markt verfügbaren vertikal anschließbaren Abscheider sind so aufgebaut, dass die Strömung auf die Horizontale umgelenkt wird und dabei das Abscheidergehäuse waagerecht durchströmt wird. Nach dem durchströmen des Abscheidergehäuses wird die Strömung wieder zurück- und in vertikale Richtung umgelenkt. Diese Schlammabscheider sind häufig wenig kompakt und schwer, wodurch sich entsprechend hohe Herstellungskosten ergeben. Dies steht zugleich einer universellen Einsetzbarkeit der Abscheider entgegen.

Aus der eingangs genannten DE 295 14 333 U1 ist eine Vorrichtung zum Entgasen von Flüssigkeiten bekannt, bei der ein Laminarisierungsbereich in Form von Röhrchen vorgesehen ist, die so dimensioniert sind, dass in ihrem Inneren Turbulenzen weder entstehen noch unterhalten werden können. Die Röhrchen werden von der Flüssigkeit von oben nach unten durchströmt und erzeugen einen zusätzlichen Druck- bzw. Energieverlust.

Aus der DE 288 158 C ist weiterhin ein Verfahren zum Abscheiden von im Wasser absorbierten Gasen bekannt, bei dem das gashaltige Wasser durch Dreh- oder Hobelspäne aus beliebigem Material geleitet wird. In einem Behälter durchströmt das Wasser durch ein trichterförmiges, mit nach der Außenseite sich erweiternden Öffnungen versehenes Blech verteilt das Entgasungsmaterial und wird mittels eines durch den Trichter vor der aufsteigenden Luft geschützten Stutzens unterhalb des niedrigsten Wasserstandes entnommen.

Schließlich ist aus der DE 10 2005 060 851 A1 noch eine Vorrichtung zum Entgasen eines flüssigen oder pastösen Mediums bekannt, bei der ein Auslass für die gasarme Fraktion von einer Vakuumkammer umschlossen ist, die einen Vakuumanschluss bzw. einen Unterdruckerzeuger aufweist, und die Vakuumkammer noch einen weiteren Auslass für gasfreies Medium aufweist.

Aufgabe der Erfindung ist es, einen Gasabscheider anzugeben, der einen einfacheren und kompakteren Aufbau bei zugleich verringertem Gewicht aufweist und der insgesamt kostengünstiger zu fertigen ist.

Die erfindungsgemäße Aufgabe wird gelöst durch einen Gasabscheider mit den Merkmalen von Anspruch 1.

Der mit dem erfindungsgemäßen Abscheider verbundene Vorteil besteht im Wesentlichen darin, dass dieser einen insgesamt einfacheren konstruktiven Aufbau aufweist und bei hoher Effizienz besonders kompakt ausgeführt werden kann. Der Abscheider kann mit einem geringeren Materialeinsatz gefertigt werden und weist dadurch ein geringeres Gewicht auf. Neben den damit einhergehenden Kostenvorteilen wird zugleich ein breiteres Einsatzspektrum des Abscheiders ermöglicht. Die Abscheidekammer weist einen im Vergleich zur Kammeröffnung des Innenraums erweiterten Strömungsquerschnitt auf, wodurch die Flüssigkeit durch die Abscheidekammer mit einer für den Abscheidevorgang günstigen, d.h. verlangsamten Geschwindigkeit pro Querschnittsflächeneinheit strömt. Der erfindungsgemäße Abscheider kann in beiden Richtungen durchströmt werden.

Weitere Vorteile und vorteilhafte Ausgestaltungen des Gegenstands der Erfindung ergeben sich aus der Beschreibung, den Ansprüchen und der Zeichnung. Nachfolgend wird die Erfindung anhand eines in der Zeichnung wiedergegebenen Ausführungsbeispiels näher erläutert. Die gezeigte und beschriebene Ausführungsform ist nicht als abschließende Aufzählung zu verstehen, sondern hat vielmehr beispielhaften Charakter für die Schilderung der Erfindung. Die Figuren der Zeichnung zeigen den erfindungsgemäßen Gegenstand stark schematisiert und sind nicht maßstäblich zu verstehen. Die einzelnen Bestandteile des erfindungsgemäßen Gegenstands sind so dargestellt, dass ihr Aufbau gut gezeigt werden kann.

In der Zeichnung zeigen:
- Fig. 1: einen erfindungsgemäßen Luftabscheider in einem Längsschnitt; und
- Fig. 2: den längsaufgeschnittenen Luftabscheider von Fig. 1 in einer perspektivischen Ansicht.

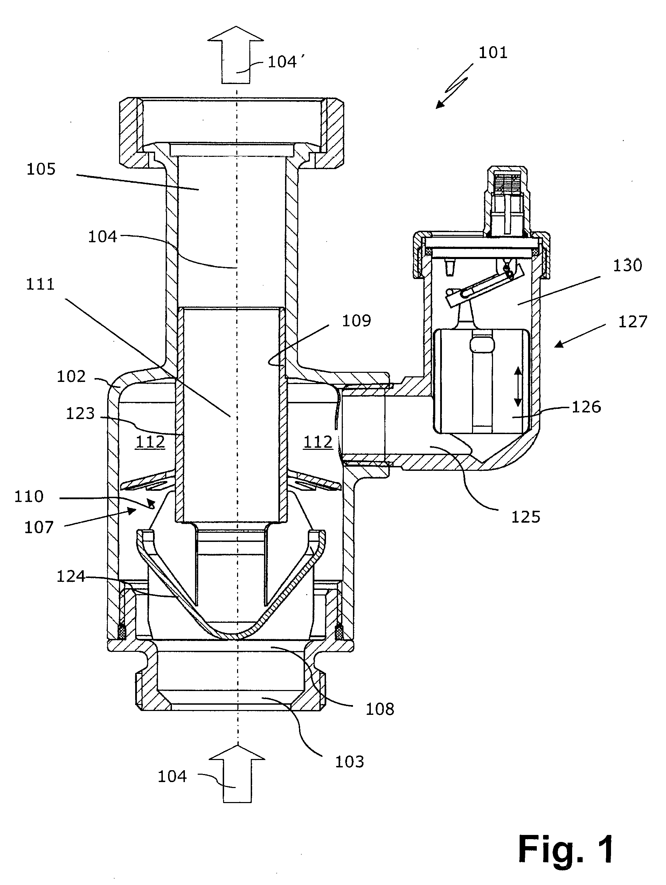

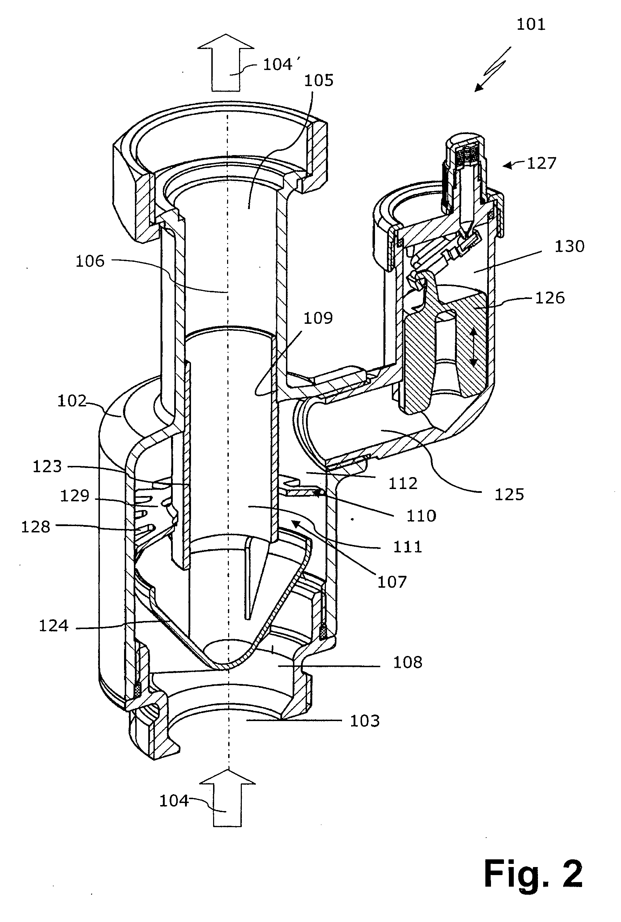

Der in **Fign. 1** **und** **2** gezeigte Luftabscheider **101** dient zum Abscheiden von in einer Flüssigkeit enthaltenen Luftblasen. Anstelle von Luft können selbstredend auch andere in der Flüssigkeit enthaltene Gasblasen abgeschieden werden.

Der Luftabscheider **101** umfasst:
- ein Abscheidergehäuse **102** mit einer unteren Einlassöffnung **103** für die zu reinigende Flüssigkeit **104** und mit einer oberen Auslassöffnung **105** für die gereinigte Flüssigkeit **104',** wobei die Einlassöffnung 103 und die Auslassöffnung 105 koaxial zur vertikalen Gehäuseachse **106** angeordnet sind;
- eine Abscheidekammer **107** mit einer unteren Kammeröffnung **108,** die an die Einlassöffnung 103 angeschlossen ist, und mit einer oberen Kammeröffnung **109,** die an die Auslassöffnung 105 angeschlossen ist;
- einen vertikalen Rohrstutzen **123,** der die Abscheidekammer 107 auf einem oberen Bereich in einen Innenraum **111,** welcher die obere Kammeröffnung 109 aufweist, und einen den Innenraum 111 umgebenden äußeren Ringraum **112** unterteilt,
- eine im äußeren Ringraum 112 vorgesehene Gasblasenabscheidereinrichtung **110** zum Abscheiden von Gasblasen aus der Flüssigkeit, und
- ein in der Flucht zwischen Rohrstutzen 123 und der unteren Kammeröffnung 108 angeordnetes Umlenkelement **124,** das sich radial nach außen bis auf die radiale Höhe des äußeren Ringraums 112 erstreckt und als eine nach unten konisch zulaufende Umlenkplatte gebildet ist.

An den äußeren Ringraum 112 ist eine Entlüftungsleitung **125** angeschlossen, um die im äußeren Ringraum 112 angesammelte Luft zu entlüften. Die Entlüftungsleitung 125 weist ein von einem Schwimmer **126** betätigtes Entlüftungsventil **127** auf.

Die Gasblasenabscheidereinrichtung 110 ist durch einen mit Durchtrittsöffnungen **128** versehenen schirmartigen Rechen **129** gebildet.

Nachfolgend wird die Funktionsweise des Luftabscheiders 101 mit Bezug auf die Fign. 1 und 2 erläutert.

Die die Luftblasen enthaltende Flüssigkeit 104 wird dem Luftabscheider 101 über die Einlassöffnung 103 zugeführt und strömt über die untere Kammeröffnung 108 in die Abscheidekammer 107 ein. Die Flüssigkeit wird durch das Umlenkelement 124 radial nach außen und in den äußeren Ringraum 112 der Abscheidekammer 107 umgelenkt. Aufgrund des gegenüber der Einlassöffnung 103 vergrößerten Strömungsquerschnitts der Abscheidekammer 107 weist die Flüssigkeit 104 beim Durchfließen der Abscheidekammer 107 eine deutlich verlangsamte Strömungsgeschwindigkeit pro Querschnittsflächeneinheit der Abscheidekammer 107 auf. Dadurch können sich Luftblasen aufgrund des Dichteunterschiedes vom Wasser lösen und aufsteigen (bzw. die leichtere Luftblase wird nicht mit der umgelenkte Strömung mitgezogen und steigt auf). Die Luftblasen steigen nach oben durch die Durchlassöffnungen 128 der Gasblasenabscheidereinrichtung 110 in den strömungstechnisch beruhigten oberen Bereich des äußeren Ringraums 112 auf. Die von Luftblasen befreite Flüssigkeit strömt zwischen dem Strömungsleitelement 124 und dem Rohrstutzen 123 in den Innenraum 111 der Abscheidekammer 107, d.h. in den Rohrstutzen, ein und strömt über die obere Kammeröffnung 109 und die Auslassöffnung 105 aus dem Luftabscheider 1 aus. Die sich im äußeren Ringraum 112 angesammelte Luft wird über die Entlüftungsleitung 125 aus dem Luftabscheider 1 zum Entlüftungsventil 127 herausgeführt, wo sich die Luft im Schwimmerraum **130** sammelt. Bei zunehmendem Luftvolumen innerhalb des Schwimmerraums 130 wird die darin befindliche Flüssigkeit nach unten verdrängt, so dass der Schwimmer 126 mit dem absinkenden Flüssigkeitspegel 20 im Schwimmerraum 130 absinkt, bis das Ablassventil 130 durch den Schwimmer 126 geöffnet wird. Die Luft entweicht über das Entlüftungsventil 127, während die Flüssigkeit von unten in den Schwimmerraum 130 nachströmt, bis der so wieder angehobene Schwimmer 126 das Entlüftungsventil 127 wieder verschließt. Insoweit reguliert sich der Luftabscheider im Betrieb selbsttätig.

Die Flüssigkeit kann den Luftabscheider 101 im Betrieb grundsätzlich auch in entgegengesetzter Richtung, d.h. von oben nach unten, durchströmen.

## Patentansprüche

1. Gasabscheider (101) zum Abscheiden von in einer Flüssigkeit (104) enthaltenen Gasblasen, aufweisend:
eine Abscheidekammer (107) mit einer oberen Kammeröffnung (109) und einer unteren Kammeröffnung (108), von denen die eine als Einlass für die zu reinigende Flüssigkeit (104) und die andere als Auslass für die gereinigte Flüssigkeit (104') vorgesehen ist,
einen vertikalen Rohrstutzen (123), der die Abscheidekammer (107) auf einem oberen Bereich in einen Innenraum (111), welcher die obere Kammeröffnung (109) aufweist, und einen den Innenraum (111) umgebenden äußeren Ringraum (112) unterteilt,
eine Gasblasenabscheidereinrichtung (110) im äußeren Ringraum (112) zum Abscheiden von Gasblasen aus der Flüssigkeit, ein in der Fluchet zwischen Rohrstutzen (123) und der unteren Kammeröffnung (108) angeordnetes Umlenkelement (124), das sich radial nach außen bis auf die radiale Höhe des äußeren Ringraums (112) erstreckt, und
ein mit dem äußeren Ringraum (112) mittels einer Entlüftungsleitung (125) verbundenes Entlüftungsventil (127),
**dadurch gekennzeichnet,**
**dass** im äußeren Ringraum (112) ein mit Durchtrittsöffnungen (128) versehener Rechen (129) vorgesehen ist, durch den der oberhalb des Rechens (129) befindliche obere Bereich des äußeren Ringraums (112) strömungstechnisch beruhigt ist, und dass das Entlüftungsventil (127) mit dem äußeren Ringraums (112) verbunden ist.

2. Abscheider nach Anspruch 1, **dadurch gekennzeichnet, dass** das Entlüftungsventil (127) als ein von einem Schwimmer (126) betätigtes Entlüftungsventil ausgebildet ist.

3. Abscheider nach einem der vorhergehenden Ansprüche, **dadurch gekennzeichnet, dass** das Umlenkelement (124) als eine nach unten konisch zulaufende Umlenkplatte gebildet ist.

4. Abscheider nach einem der vorhergehenden Ansprüche, **dadurch gekennzeichnet, dass** die obere Klammeröffnung (108) und die untere Kammeröffnung (109) koaxial zueinander angeordnet sind.

## Claims

1. Gas separator (101) for separating gas bubbles contained in a liquid (104), comprising:
a separating chamber (107) with an upper chamber opening (109) and a lower chamber opening (108), one of which is provided as an inlet for the liquid (104) to be cleaned and the other is provided as an outlet for the cleaned liquid (104'),
a vertical pipe socket (123) which divides the separating chamber (107) in an upper area into an internal room (111) comprising the upper chamber opening (109), and an outer annular room (112) which surrounds the internal room (111),
a gas bubble separator (110) in the outer annular room (112) for separating gas bubbles from the liquid,
a deflection element (124) which is arranged in alignment between the pipe socket (123) and the lower chamber opening (108) and radially extends to the outside up to the radial height of the outer annular room (112), and
a vent valve (127) which is connected to the outer annular room (112) by means of a vent line (125),
**characterized in**
**that** a rake (129) comprising openings (128) is provided in the outer annular room (112) which calms the flow in the upper area of the outer annular room (112) above the rake (129), and that the vent valve (127) is connected to the outer annular room (112).

2. Separator according to claim 1, **characterized in that** the vent valve (127) is designed in the form of a vent valve that is actuated by a float (126).

3. Separator according to any one of the preceding claims, **characterized in that** the deflection element (124) is designed in the form of a deflection plate that tapers conically in a downward direction.

4. Separator according to any one of the preceding claims, **characterized in that** the upper chamber opening (108) and the lower chamber opening (109) are arranged coaxially with respect to each other.

## Revendications

1. Séparateur de gaz (101) pour séparer des bulles de gaz contenues dans un liquide (104), présentant :
une chambre de séparation (107) avec une ouverture de chambre supérieure (109) et une ouverture de chambre inférieure (108), dont l'une est prévue comme entrée pour le liquide à purifier (104) et l'autre comme sortie pour le liquide purifié (104'),
une tubulure verticale (123) qui divise la chambre de séparation (107) dans une zone supérieure en un espace intérieur (111) qui présente l'ouverture de chambre supérieure (109) et une chambre annulaire extérieure (112) qui entoure l'espace intérieur (111),
un dispositif de séparation de bulles de gaz (110) dans la chambre annulaire extérieure (112) pour séparer les bulles de gaz du liquide,
un élément déflecteur (124) disposé en alignement entre la tubulure verticale (123) et l'ouverture de chambre inférieure (108), qui s'étend radialement vers l'extérieur jusqu'à la hauteur radiale de la chambre annulaire extérieure (112), et une soupape de purge (127) reliée à la chambre annulaire extérieure (112) au moyen d'une conduite de purge (125),
**caractérisé en ce**
**qu'**un râteau (129) muni d'ouvertures de passage (128) est prévu dans la chambre annulaire extérieure (112), qui permet de stabiliser l'écoulement dans la zone supérieure de la chambre annulaire extérieure (112) située au-dessus du râteau (129), et en ce que la soupape de purge (127) est reliée à la chambre annulaire extérieure (112).

2. Séparateur selon la revendication 1, **caractérisé en ce que** la soupape de purge (127) est réalisée sous la forme d'une soupape de purge actionnée par un flotteur (126).

3. Séparateur selon une des revendications précédentes, **caractérisé en ce que** l'élément déflecteur (124) est réalisé sous la forme d'une plaque déflectrice se rétrécissant en cône vers le bas.

4. Séparateur selon une des revendications précédentes, **caractérisé en ce que** l'ouverture de chambre supérieure (108) et l'ouverture de chambre inférieure (109) sont disposées coaxialement.
